## Europäisches Patentamt
## European Patent Office
## Office européen des brevets

(11) Veröffentlichungsnummer: **0 123 019**

**A1**

(12) ## EUROPÄISCHE PATENTANMELDUNG

(21) Anmeldenummer: **84100840.2**

(22) Anmeldetag: **27.01.84**

(51) Int. Cl.³: **D 06 B 19/00**

(30) Priorität: **29.01.83 DE 3303031**

(43) Veröffentlichungstag der Anmeldung:
**31.10.84 Patentblatt 84/44**

(84) Benannte Vertragsstaaten:
**AT CH DE FR GB IT LI NL**

(71) Anmelder: **Mitter, Mathias**
**Falkenstrasse 57**
**D-4815 Schloss Holte(DE)**

(72) Erfinder: **Mitter, Mathias**
**Falkenstrasse 57**
**D-4815 Schloss Holte(DE)**

(74) Vertreter: **Loesenbeck, Karl-Otto, Dipl.-Ing. et al,**
**Jöllenbecker Strasse 164**
**D-4800 Bielefeld 1(DE)**

(54) **Als Schlitzrakel od. dgl. ausgebildete Auftragsvorrichtung.**

(57) Die Auftragsvorrichtung besteht aus einem stirnseitig geschlossenen Auftragsrohr (10), welches mit einem Zuflußstutzen (11) für das Auftragsmedium versehen ist. Das Auftragsrohr ist mit einem Auftragsschlitz oder mit Durchtrittsquerschnitten versehen, die zur Auftragsebene hin gerichtet sind. Das Auftragsrohr ist mit mindestens einem Abführstutzen (18, 18') versehen, durch welchen während des Produktionsvorganges freigesetzte Luft oder Flotte abführbar ist. Dadurch ist ein gleichmäßiges Füllen des Auftragsrohres mit einem verschäumten Auftragsmedium sichergestellt, so daß ein gleichmäßiges Ausströmen der Auftragsflotte zum Substrat hin gewährleistet ist. Die Vorrichtung kann über ein Sieb oder über eine Schablone arbeiten.

Fig.1

EP 0 123 019 A1

0123019

9/5

-/-

Mathias Mitter, Falkenstr. 57, 4815 Schloß Holte

Als Schlitzrakel od.dgl. ausgebildete Auftragsvorrichtung
zum Auftragen von Flotte od.dgl. auf vorzugsweise Fasermaterial enthaltende flächige Waren bzw. Warenbahnen

--- BEZEICHNUNG GEÄNDERT.
siehe Titelseite

Die vorliegende Erfindung betrifft eine als Schlitzrakel
od.dgl. ausgebildete Auftragsvorrichtung zum Auftragen von
Flotte od.dgl. auf vorzugsweise Fasermaterial enthaltende
flächige Waren bzw. Warenbahnen gemäß dem Oberbegriff des
Anspruches 1.

Eine derartige Schlitzrakel ist bereits durch die DE-OS
23 09 300 bekannt. Bei dieser vorbekannten Schlitzrakel
ist eine große Anzahl von Kammern vorhanden, die sich in
einem festen System innerhalb eines Gehäuses hintereinanderreihen, indem ihr Querschnitt sich mehr und mehr verkleinert und dafür aber die Anzahl der Kammern sich vergrößert.
Als letztes wird der Kammerbereich zu einer einheitlichen
Auftragskammer zusammengezogen, die direkt über dem Auftragsschlitz vorhanden ist. Bei dieser Vorrichtung muß
jede Kammer ihren Inhalt voll in die nächste Kammer weiter
geben, wobei keinerlei Lufteinschlüsse vorkommen dürfen.
Jede Kammer muß voll mit dem Auftragsmedium gefüllt werden, wobei das Auftragsmedium aus einer Flotte oder einer
Farbpaste besteht. Um nun mit Garantie zu verhindern, daß
die letzte Kammer, in die das Auftragsmedium die ursprünglich in der Auftragsvorrichtung vorhandene Luft einmal getrieben hat, irgendwie doch Luft speichert, ist diese Kammer nach oben hin etwas erhöht ausgebildet und weist Entlüftungsrohre auf, die sich über die Gesamtarbeitsbreite der Auftragseinrichtung jeweils im Abstand voneinander stehend erstrecken. Bei der Verarbeitung von Druckpasten, die über geschlossene Räume aufgetragen werden sollen, muß immer die eingeschlossene Luft entfernt werden, da sonst kein gleichmäßiger Druck im Inneren der Schlitzrakel aufgebaut werden kann. Als Schlitzrakel versteht man eine Auftragsvorrichtung, vorzugsweise mit einem allseitig geschlossenen Rakelgehäuse. Eine derartige Schlitzrakel ist nur zur Auftragsebene offen, und zwar im Rakelschlitz bzw. in entsprechenden Öffnungen. Im Inneren des Gehäuses kann ein flüssiges oder pastöses Medium, beim Gegenstand der vorliegenden Erfindung soll es ein verschäumtes Medium sein, unter atmosphärischem oder einem höheren als atmosphärischem Druck stehen, was durch einen spaltförmigen oder ähnlichen, gegen die Warenbahn bzw. die Schablone gerichteten Austrittsbereich auf die Ware gelangt. Dabei kann das gesamte Rakelgehäuse bzw. die gesamte Auftragsvorrichtung mit Zuführungsrohren od.dgl. für das Medium versehen sein. Die Auftragsvorrichtung oder die Schlitzrakel wird außerhalb der Schablone in Rakelhaltern einstellbar gelagert.

Diese vorbekannte Vorrichtung aus der DE-OS 23 09 300 ist für den Auftrag von Flotten oder Farbpasten geeignet, nicht aber für den Auftrag verschäumter Flotten. Würde man diese bekannte Vorrichtung mit Schaum füllen, so ist es selbstverständlich, daß nicht nur Luft durch die Abführstutzen abgeführt würde, sondern auch Schaum bzw. Schaumteile, insbesondere aber auch abgetrocknete Schaumteile. Es wäre für den Druck oder für eine Färbung tödlich, wenn Schaum in das Innere der Siebdruckschablone gelangte bzw. wenn Schaum oder Schaumteile auf den Auftragsbereich gelangten. Mit der genannten DE-OS 23 09 300 ist das Auftragen verschäumter Flotten nicht möglich, da kein einwandfreier Druck oder keine einwandfreie Färbung mit einer solchen Vorrichtung mehr möglich wäre.

Weiterhin ist es aber bereits schon bekannt, verschäumte Flotten aufzutragen. So ist eine Auftragsvorrichtung durch die DE-OS 25 23 062 bekannt, bestehend aus einem Auftragskasten, der mit Stolperstufen versehen ist, wobei die verschäumte Flotte flächig auf die Ware aufgebracht wird. Diese bekannte Auftragsvorrichtung ist mit einem Ventil zum Abführen der beim Füllen der Auftragsvorrichtung mit verschäumter Flotte verdrängten Luft versehen. Zur Inbetriebnahme einer mit einer solchen Auftragsvorrichtung ausgerüsteten Anlage muß dieses Ventil geöffnet werden. Während des Auftragens von verschäumter Flotte ist das Ventil ständig geschlossen. Bei derartigen Auftragskästen wird von vornherein damit gerechnet, daß Lufteinschlüsse vorhanden sind. Wenn aber eine solche Vorrichtung als Schlitzrakel ausgebildet ist und voll mit Schaum gefüllt werden soll, wobei der Schaum dann radial durch den Schlitz o.ä. Ausführungsquerschnitte abgegeben wird, führten Lufteinschlüsse zu einer ungleichmäßigen Abgabe des Auftragsmediums.

Bei dieser vorbekannten Vorrichtung für den Schaumauftrag besteht ein weiterer Übelstand darin, daß sich in Eckbereichen der Auftragsvorrichtung Altschaum sammeln kann, der auf keinerlei Art und Weise abgeführt wird. Die zerplatzten Bläschen geben dabei Flotte frei und die zugeführte verschäumte Flotte wird dadurch stellenweise unbrauchbar gemacht.

Der vorliegenden Erfindung liegt demzufolge die Aufgabe
zugrunde, eine Auftragsvorrichtung der eingangs genannten
Art zu schaffen, mit der gewährleistet ist, daß im Inneren der Auftragsvorrichtung keine störenden Medien vorhanden sind, wie Lufteinschlüsse, Altschaumdepots od.dgl.,
um zu garantieren, daß der Schaum innerhalb der Auftragsvorrichtung gleichmäßig läuft und der Ware zugeführt wird,
während aber der Auftragsbereich völlig frei gehalten wird
von irgendwelchen zutropfenden Flottenteilen.

Die Lösung der gestellten Aufgabe ergibt sich aus dem Kennzeichen des Anspruches 1.

Es ist nunmehr möglich, bei Auftreten von Luftblasen bzw.
Lufteinschlüssen innerhalb des aufzutragenden Schaumes oder
aus Schaum rückgebildete Flotte während des Produktionsprozesses durch Abführstutzen auszuscheiden. Der auf die
Ware aufzutragende Schaum kann sich dadurch ohne Behinderung im Inneren der Auftragsvorrichtung vorwärtsbewegen
und gleichmäßig verteilen. Da vorzugsweise der Schaum in
radialer Richtung durch einen in der Auftragsvorrichtung
vorgesehenen Auftragsschlitz od.dgl.

hindurchfließt, ist die gleichmäßige Verteilung von besonderer Bedeutung.

Die Vorrichtung soll im wesentlichen dazu dienen, eine
vorzugsweise mit Farbstoff oder Chemikalien versehene
Flotte auf eine ebene, vorzugsweise Fasermaterial enthaltende flächige Ware aufzubringen, und zwar vorzugsweise durch ein Sieb oder eine Schablone hindurch, um
eine Ware zu bedrucken, zu färben oder zu benetzen. Auch
einfaches Wasser kann in verschäumter Form aufgebracht
werden, wenn ein einfacher Netzvorgang gewünscht wird.

Der Auftrag kann im Siebdruckverfahren erfolgen oder
auch einfach durch ein Sieb hindurch. Die Siebe oder
Schablonen können bemustert oder unbemustert angetrieben oder nicht angetrieben sein. Bei Siebdruckmaschinen
oder siebdruckähnlichen Maschinen ist es besonders wichtig, daß eine gleichmäßige Zuführung des verschäumten
Mediums erfolgt, damit ein gleichmäßiger Druck bzw.
eine gleichmäßige Färbung der Ware erfolgt.

Außer Farbe oder Farbstoff bzw. Chemikalienflotten kann
auch Latexschaum aufgetragen werden als Schicht, ebenso
können die Waren behandelt oder beschichtet werden.

Als Substrat kommen insbesondere Warenbahnen mit faseriger Struktur in Betracht, wie Textilien aller Art, darunter auch Teppiche, Florware, Samte, ferner Vliese,
aber auch Filze. Der Übergang zu Non-wovens bis Papier
ist möglich, ggf. auch feste Stoffe, z.B. zu beschichtende Kunststoffe.

Das Hauptanwendungsgebiet ist aber das Drucken und Färben.

Bei Ausgestaltung der Vorrichtung nach Anspruch 1 ist die Möglichkeit gegeben, daß abzuführende Luft oder abzuführende Flotte, und zwar verschäumte Flotte gegebenenfalls ständig oder in regelmäßigen oder unregelmäßigen Intervallen durch das Öffnen bzw. Schließen der Ventile abgeführt wird. Statt der Ventile können auch Hähne, die mehr oder weniger geöffnet werden, angeordnet sein.

Ferner besteht die Möglichkeit, daß in bestimmten Fällen überschüssige Mengen von zugeführter Flotte abgeführt werden, wenn die Menge der zugeführten Flotte größer ist als die Menge der verbrauchten Flotte. Dies ist von besonderer Bedeutung, da einerseits die abgeführte Flotte aufgefangen und wieder verwertet werden kann, während andererseits eine Bildung von Restschaum vermeidbar ist.

Vorzugsweise wird die Auftragsvorrichtung so gestaltet, daß der auf die Ware aufzutragende Schaum durch einen im unteren Bereich der Auftragsvorrichtung liegenden Schlitz od.dgl. abgeführt wird. Statt eines Schlitzes können Durchführungsquerschnitte vorgesehen sein, die beispielsweise in ein oder mehreren Reihen angeordnet sind.

Bei allen Ausführungen ist es besonders vorteilhaft, daß mindestens ein, vorzugsweise als Luftablaßventil ausgebildeter Abführstutzen im oberen Bereich einer der Stirnseiten der als Auftragsrohr ausgebildeten Auftragsvorrichtung angeordnet und seitlich aus dem Sieb oder Schablonenbereich herausgeführt wird. Dies ist besonders vorteilhaft, da sich die abzuführende Luft im oberen Bereich der Auftragsvorrichtung sammelt.

Es besteht auch die Möglichkeit, die Schaumzuführung, bezogen auf die Länge der Auftragsvorrichtung, beidseitig anzuordnen. Dann ist es vorteilhaft, wenn ein als Luft-

0123019

ablaßventil ausgebildeter Abführstutzen mittig im oberen Bereich, bezogen auf die Länge der Auftragsvorrichtung, angeordnet ist. Dieses Luftablaßventil liegt in diesem Abführstutzen, der während des Betriebes der Vorrichtung als Abführstutzen benutzt wird, dem aber auch die Möglichkeit gegeben ist, bei Stillstand der Vorrichtung dieses Rohr an eine Saugpumpe anzuschließen. Die verschäumte Flotte wird dann aus der Rakel herausgesaugt, einerseits, um nicht allzu große Flottenverluste zu erhalten und hauptsächlich, um die Rakel überhaupt demontieren zu können, da bei einer vollen Rakel die Flotte während des Ausbauvorganges ggf. aus dem Schlitz herauslaufen würde und die gesamte Umgebung mit Farbflotte verschmieren könnte. Der Begriff "Abführstutzen" ist somit nicht einschränkend zu verstehen.

Vorteilhaft ist es, von beiden Stirnenden der Vorrichtung sowohl Abführstutzen für Luft und Abführstutzen für Flottenablaß vorzusehen, damit auf keinen Fall in irgendeinem Seitenbereich Luft- oder Flotteneinschlüsse vorhanden sind.

Mehrere Ausführungsbeispiele der Erfindung werden anhand der Fig. 1 bis 6 näher erläutert. Es zeigen:

Fig. 1    ein Ausführungsbeispiel einer Vorrichtung im Längsschnitt, stark schematisiert,

Fig. 2    die Vorrichtung im Querschnitt innerhalb einer an sich bekannten rotierenden Siebschablone oder eines Siebes, stark schematisiert,

Fig. 3+4  die Vorrichtungen in perspektivischer Darstellung, ebenfalls stark schematisiert,

Fig. 5+6  weitere Ausführungsbeispiele einer Vorrichtung im Querschnitt, stark schematisiert.

Die erfindungsgemäße Auftragsvorrichtung 1 zum Auftragen von verschäumter Flotte besteht aus einem endseitig geschlossenen Auftragsrohr 10, das vorzugsweise als rundes Rohr ausgebildet ist. Dieses Auftragsrohr ist einseitig füllbar ausgebildet und hat an einer seiner Stirnseiten einen Zuflußstutzen 11, durch den in der angegebenen Pfeilrichtung A von einem Schaumgenerator 2 kommend das verschäumte Medium zugeführt wird. Es kann ein beliebi- ger Schaumgenerator eingesetzt werden, und zwar ein sta- tischer oder auch ein dynamischer Schaumgenerator. Schaumgeneratoren sind an sich bekannt.

Auf der dem Zuflußstutzen 11 gegenüberliegenden Seite ist an der Auftragsvorrichtung 1 ein Auslaßstutzen 12 mit einem Verschluß 13 vorgesehen, welches auch beispielsweise als ein Mengenregulierventil ausgebildet sein kann. Dieses Mengenregulierventil oder der Verschluß 13 ermöglicht einen Druckaufbau im Innenraum 14 des Auftragsrohres 10, durch den ein gleichmäßiger Ausfluß des verschäumten Mediums durch die Durchtrittsöffnung bzw. die Durchtrittsöffnungen 15 erfolgt. Da dadurch im gesamten Innenraum 14 ein gleichmäßiger Druck herrscht, erfolgt auch der Auftrag des Schaumes auf die Ware 3, wobei die Eindringtiefe des Auftragsmediums in die Ware 3 durch Steuerung des Druckes regulierbar ist.

Der Auslaßstutzen 12 führt über den Verschluß 13 bzw. das Mengenregulierventil zu einem Tank 4 mittels eines Rohres 12'. Der Tank 4 fängt die überschüssige, wieder verwendbare Flotte auf.

Das Auftragsmedium kann auch bereits unter Druck der Auftragsvorrichtung zugeführt werden.

Wesentlich ist bei dieser Ausbildung, daß ein gleicher, kontinuierlicher Strom des Auftragsmediums von einer Seite der Auftragsvorrichtung zur anderen führt.

Zur Vermeidung von Ecken und Kanten im Innenraum 14 des Auftragsrohres 10 und um zu gewährleisten, daß bereits direkt am Anfang des Auftragsrohres 10 schon auf der Zuflußseite der zufließende Schaum den gleichen Querschnitt hat, sind die Stirnseiten des Zuflusses und/oder des Auslasses mit kegelförmig sich zu dem Innenraum 14 des Auftragsrohres 10 öffnenden Erweiterungen versehen. Der größte Durchmesser der kegelförmigen Erweiterung entspricht dem Innendurchmesser des Auftragsrohres. Die Stirnseitenabschlüsse 16 und 17 sind somit relativ breite, scheibenförmige Teile, die diese Erweiterungen 116 und 117 tragen.

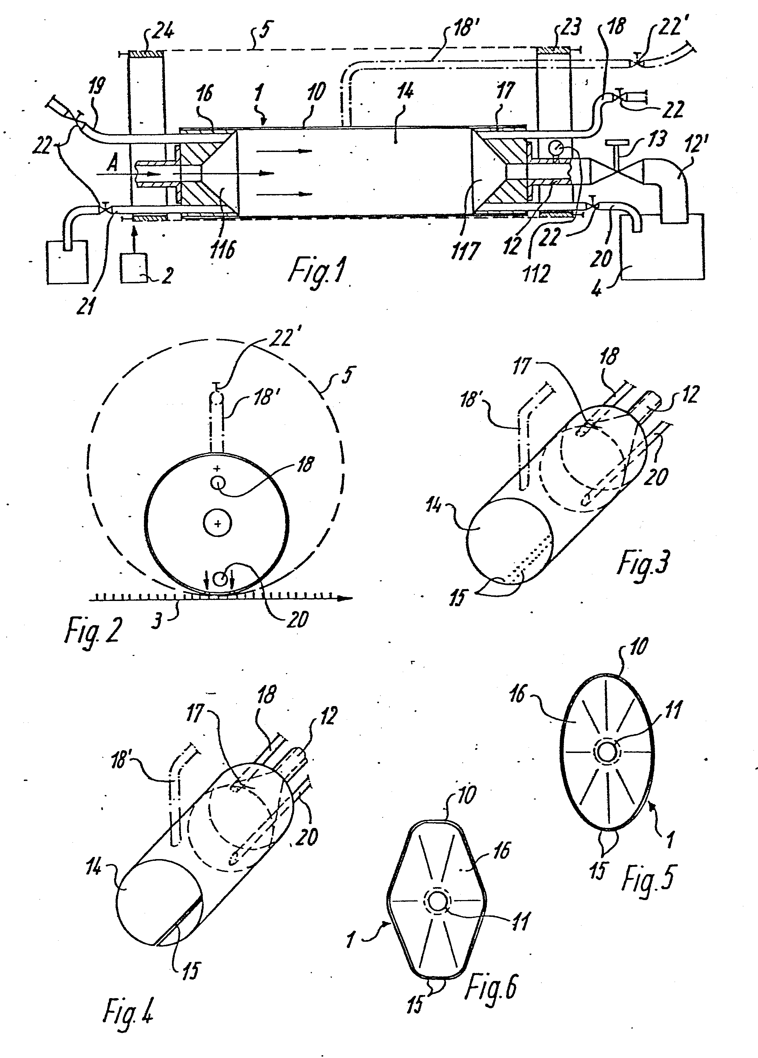

Die Fig. 2 zeigt ferner, daß die Möglichkeit gegeben ist, über ein Sieb oder eine Schablone 5 zu arbeiten. Dieses Sieb oder die Schablone kann angetrieben sein, es kann sich um ein Schablonenband handeln, einen Siebzylinder od.dgl. Der Auftrag auf die Ware 3 erfolgt in diesem Fall dann durch die Schablone hindurch. Mit einer solchen Schablone kann gefärbt, gemustert, getränkt, gefeuchtet u.dgl. werden.

Wie aus den Fig. 3 und 4 hervorgeht, besteht die Möglichkeit der unterschiedlichen Ausbildung der Durchtrittsöffnungen 15. Fig. 3 zeigt Reihenanordnungen von Durchtrittsöffnungen, während Fig. 4 einen Auftragsschlitz zeigt.

In den Fig. 5 und 6 ist dargestellt, daß das Auftragsrohr 10 nicht unbedingt, im Querschnitt gesehen, rund ausgebildet werden muß. Es kann eine ovale Formgebung haben oder die Form eines Rhombus mit abgerundeten Eckbereichen. Sowohl das Oval als auch der Rhombus stehen dann hochkant. Wesentlich ist der Zufluß zu den Durchtrittsöffnungen, die Austrittsquerschnitte sind. Ferner ist es wichtig, daß keine Ecken und Kanten in der Formgebung entstehen, da dadurch Altschaum liegen bleibt.

Bei dem in der Fig. 1 dargestellten Ausführungsbeispiel sind in jedes stirnseitige Ende des Auftragsrohres 10 zwei Abführstutzen 18,19,20,21 eingesetzt. Jeder Abführstutzen 18 bis 21 ist durch die Stirnseitenabschlüsse 16, 17 geführt und erstreckt sich somit bis in den Innenraum 14 des Auftragsrohres 10. Jeder Abführstutzen 18 bis 21 weist je einen Verschluß 22 auf, der auch als Ventil ausgebildet sein kann. Im vorliegenden Ausführungsbeispiel liegen an jedem Stirnende zwei Abführstutzen 18, 20 bzw. 19, 21 derart übereinander, daß der Abführstutzen 18 bzw. 19 im oberen Bereich und der Abführstutzen 20, 21 im unteren Bereich liegt. Die oberen Abführstutzen 18, 19 sind im vorliegenden Ausführungsbeispiel zum Abführen von Luft vorgesehen, während die unteren Abführstutzen 20, 21 zum Abführen von Flotte vorgesehen sind. Der Abführstutzen 20 mündet in den Tank 4, so daß die dadurch abgeführte Flotte zur Wiederverwendung aufgefangen wird. Zum Auffangen der durch den Abführstutzen 21 abgeleiteten Flotte ist ein Tank 4' vorgesehen, in den das freie Ende des Abführstutzens 22 mündet. Im Gegensatz zum dargestellten Ausführungsbeispiel kann jedoch auch der Abführstutzen 21 in den Tank 4 geführt werden. Die Abführstutzen 18, 19 leiten die abzuführende Luft in die Atmosphäre ab.

Bei dem in den Fig. 1 und 2 dargestellten Ausführungsbeispielen erfolgt der Auftrag des Mediums auf die Ware bzw. in die Ware durch das Sieb oder die Schablone 5 hindurch. Im Gegensatz dazu ist auch ein direkter Auftrag möglich. Wie aus der Fig. 1 erkennbar, ist das Sieb oder die Schablone 5 stirnseitig von je einem Endring 23, 24 gehalten.

Bei dem in der Fig. 1 dargestellten Ausführungsbeispiel sind insgesamt vier Abführstutzen vorgesehen. Fallweise kann es jedoch ausreichend sein, mit weniger Abführstutzen zu arbeiten. So kann es beispielsweise ausreichend sein, lediglich den Abführstutzen 18 zum Abführen von Luft vorzusehen. Ferner besteht die Möglichkeit, nur an jedem Ende einen Abführstutzen 18, 19 anzuordnen. Die Abführstutzen 20, 21 können dann wahlweise und zusätzlich eingebaut werden. Darüber hinaus besteht die Möglichkeit, lediglich einen Abführstutzen zum Abführen von Luft in der Mitte oder etwa in der Mitte, bezogen auf die Länge des Auftragsrohres gesehen, im oberen Bereich vorzusehen. Diese Möglichkeit ist in der Fig. 1 in strichpunktierten Linien dargestellt. Der Abführstutzen sowie der Verschluß sind mit den Bezugszeichen 18' und 22' versehen.

Die Zuführung des Schaumes erfolgt bei den dargestellten Ausführungsbeispielen von der Stirnseite des Auftragsrohres 10 aus. Die Zuführung kann jedoch auch in anderer Weise erfolgen, beispielsweise durch einen auf die Oberseite des Auftragsrohres 10 aufgesetzten Zuflußstutzen. Dieser kann dann mittig oder auch seitlich versetzt angeordnet sein.

Der Erfindungsgedanke ist nicht auf die dargestellten Ausführungsbeispiele beschränkt. Wesentlich ist die Anbringung von Abführstutzen in einer Anzahl und in einer Anordnung, die den Anforderungen gerecht wird. Die Anordnung bzw. die Anzahl der Abführstutzen kann beispielsweise von der Art der Zuführung des Auftragsmediums und von der Breite der zu behandelnden Ware abhängen. Die Verschlüsse 22 können handelsüblich zu beziehende Ventile sein. Außerdem können an den Auslaßstutzen 12 Druckmeßvorrichtungen 112 vorgesehen werden.

Die offenbarten Merkmale, einzeln und in Kombination, werden, soweit sie gegenüber dem Stand der Technik neu sind, als erfindungswesentlich angesehen.

9/5

P a t e n t a n s p r ü c h e
================================

1. Als Schlitzrakel od.dgl. ausgebildete Auftragsvorrichtung
   zum Auftragen von Flotte od.dgl. auf vorzugsweise Fasermaterial enthaltende flächige Waren bzw. Warenbahnen,
   wobei die Auftragsvorrichtung vorzugsweise im Inneren eines
   Siebzylinders, eines Siebbandes, einer Schablone bzw. auf
   einem Sieb oder einer Schablone angeordnet und im wesentlichen geschlossen ausgebildet ist, sowie mindestens einen
   Abführstutzen zum Abführen von freigesetzter Luft aufweist,
   d a d u r c h   g e k e n n z e i c h n e t ,
   daß zur gleichmäßigen Zufuhr von verschäumter Flotte zum
   Auftragsbereich der oder die Abführstutzen (18,19,20,21)
   vorzugsweise mit Luft- und/oder Flottenablaßventilen od.dgl.
   versehen und mindestens auf einer Seite der Schlitzrakel
   stirnseitig aus der Auftragsvorrichtung und dem Sieb- oder
   Schablonenbereich herausgeführt sind.

2. Auftragsvorrichtung nach Anspruch 1, dadurch gekennzeichnet,
   daß mindestens ein, vorzugsweise mit Luftablaßventil od.dgl.
   versehener Abführstutzen (18) im oberen Bereich einer der
   Stirnseiten der als Auftragsrohr ausgebildeten Auftragsvorrichtung (1) angeordnet und seitlich aus dem Sieb- oder
   Schablonenbereich herausgeführt ist.

3. Auftragsvorrichtung nach Anspruch 1, dadurch gekennzeichnet,
   daß ein vorzugsweise mit Luftablaßventil od.dgl. ausgestatteter Abführstutzen (18') mittig im oberen Bereich, bezogen
   auf die Länge der Auftragsvorrichtung (1), angeordnet ist.

4. Auftragsvorrichtung nach Anspruch 1, dadurch gekennzeichnet, daß mindestens auf dem der Zuführung des aufzutragenden Mediums gegenüberliegenden stirnseitigen Ende
   der Auftragsvorrichtung (1) ein mit Flottenauslaßventil
   versehener Abführstutzen (20,21) angeordnet ist, der im
   unteren Bereich der Stirnseite der Auftragsvorrichtung (1)
   angeordnet ist.

5. Auftragsvorrichtung nach Anspruch 1, dadurch gekennzeichnet, daß an jedem stirnseitigen Ende der Auftragsvorrichtung (1) je ein mit vorzugsweise Luft- oder Flottenablaßventil ausgestatteter Abführstutzen (18,19,20,21)
   angeordnet ist.

6. Auftragsvorrichtung nach Anspruch 1, dadurch gekennzeichnet, daß der Zuflußstutzen (11) zur Zuführung und/oder
   der Auslaßstutzen (12) zum Abführen des aufzutragenden
   Mediums mittig in einer Stirnseite des Auftragsrohres (10)
   angeordnet ist.

7. Auftragsvorrichtung nach Anspruch 1, dadurch gekennzeichnet, daß das Auftragsmedium vorzugsweise unter stufenlos einstellbarem Druck der Auftragsvorrichtung (1) zuführbar ist.

8. Auftragsvorrichtung nach Anspruch 1, dadurch gekennzeichnet, daß die Stirnseitenabschlüsse (16,17) des Zuflusses und/oder des Auslasses mit kegelförmig sich zum
   Innenraum (14) des Auftragsrohres (10) öffnenden Erweiterungen des Zufluß- und/oder Auslaßstutzens versehen sind
   und diese kegelförmigen Erweiterungen (116,117) in ihrem
   größten Durchmesser dem Innendurchmesser des Auftragsrohres
   (10) entsprechen.

9. Auftragsvorrichtung nach Anspruch 1, dadurch gekennzeichnet, daß die Durchtrittsöffnungen (15) des Auftragsrohres (10) in Reihenanordnungen liegen bzw. als Durchtrittsöffnung (15) des Auftragsrohres (10) ein Auftragsschlitz vorgesehen ist.

10. Auftragsvorrichtung nach Anspruch 1, dadurch gekennzeichnet, daß der Zuflußstutzen (10) für das Medium mit
einem Schaumgenerator (2) verbunden ist.

11. Auftragsvorrichtung nach Anspruch 1, dadurch gekennzeichnet, daß der vorzugsweise mit einem einstellbaren
Verschluß (13) versehene Auslaßstutzen (12) und/oder der
Abführstutzen (20) zum Abführen von Flotte in einen
Tank (4) mündet.

12. Auftragsvorrichtung nach Anspruch 1 und 4, dadurch gekennzeichnet, daß am Auslaßstutzen (12) eine Druckmeßvorrichtung (112) angeordnet ist.

Fig.1

Fig.2

Fig.3

Fig.4

Fig.5

Fig.6

Europäisches
Patentamt

**EUROPÄISCHER RECHERCHENBERICHT**

**0123019**
Nummer der Anmeldung

EP 84 10 0840

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| E | EP-A-0 100 886 MITTER) <br> * Insgesamt und insbesondere Figuren 4-6; siehe die Entlüftungsvorrichtung "60" * <br><br> ----- | 1-3 | D 06 B 19/00 |
| | | | **RECHERCHIERTE SACHGEBIETE (Int. Cl. ³)** <br><br> D 06 B <br> D 06 P |

Der vorliegende Recherchenbericht wurde für alle Patentansprüche erstellt.

| Recherchenort <br> DEN HAAG | Abschlußdatum der Recherche <br> 06-06-1984 | Prüfer <br> PETIT J.P. |
|---|---|---|